(19) Europäisches Patentamt
European Patent Office
Office européen des brevets

(11) **EP 3 523 221 B1**

(12) **EUROPÄISCHE PATENTSCHRIFT**

(45) Veröffentlichungstag und Bekanntmachung des Hinweises auf die Patenterteilung:
**15.05.2024  Patentblatt 2024/20**

(21) Anmeldenummer: **17800358.8**

(22) Anmeldetag: **10.10.2017**

(51) Internationale Patentklassifikation (IPC):
**B65G 1/04** *(2006.01)*    **B66F 9/07** *(2006.01)*
**B66F 9/075** *(2006.01)*    **B66F 9/24** *(2006.01)*

(52) Gemeinsame Patentklassifikation (CPC):
**B66F 9/07; B65G 1/0407; B66F 9/07513; B66F 9/24**

(86) Internationale Anmeldenummer:
**PCT/AT2017/060259**

(87) Internationale Veröffentlichungsnummer:
**WO 2018/068072 (19.04.2018 Gazette 2018/16)**

(54) **REGALBEDIENGERÄT UND REGALLAGERSYSTEM MIT VERBESSERTER ZUGÄNGLICHKEIT UND GEWICHTSVERTEILUNG**

STORAGE AND RETRIEVAL MACHINE AND SHELF WAREHOUSE SYSTEM HAVING IMPROVED ACCESSIBILITY AND WEIGHT DISTRIBUTION

TRANSSTOCKEUR ET SYSTÈME DE STOCKAGE À RAYONNAGES AVEC ACCÈS ET RÉPARTITION DE POIDS AMÉLIORÉS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.10.2016   AT 509142016**

(43) Veröffentlichungstag der Anmeldung:
**14.08.2019   Patentblatt 2019/33**

(73) Patentinhaber: **TGW Mechanics GmbH**
**4600 Wels (AT)**

(72) Erfinder:
• **PREIDT, Peter**
**4615 Holzhausen (AT)**
• **RAUSCH, Martin**
**4810 Gmunden (AT)**

(74) Vertreter: **Burger, Hannes**
**Anwälte Burger & Partner**
**Rechtsanwalt GmbH**
**Rosenauerweg 16**
**4580 Windischgarsten (AT)**

(56) Entgegenhaltungen:
**EP-A1- 0 608 487      EP-A1- 2 615 056**
**EP-A1- 2 883 831      US-A1- 2015 225 217**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Regalbediengerät für ein Regallagersystem, welches ein Fahrwerk umfasst, wenigstens einen Fahrmotor, welcher mit einem Antriebsrad oder mehreren Antriebsrädern des Regalbediengeräts gekoppelt ist, eine Leistungselektronik, welche mit dem zumindest einen Fahrmotor verbunden ist, sowie eine Steuerelektronik, welche mit der Leistungselektronik verbunden ist. Des Weiteren betrifft die Erfindung ein Regallagersystem, welches ein erstes Regal und ein dazu parallel ausgerichtetes zweites Regal mit einer dazwischen liegenden Regalgasse umfasst, sowie ein in der Regalgasse verfahrbares Regalbediengerät der oben genannten Art, welches in eine Übergabeposition bewegbar ist, in der ein Warentransfer oder Stückguttransfer zwischen dem Regalbediengerät und dem ersten und/oder zweiten Regal ermöglicht ist.

Regalbediengeräte und Regallagersysteme der genannten Art sind aus dem Stand der Technik, beispielsweise aus der AT 508 172 A1, grundsätzlich bekannt. Regallagersysteme dienen dem Lagern von Stückgütern beziehungsweise Waren aller Art, beispielsweise in einem Versandhaus. Das Regalbediengerät als solches dient dem Ein- und Auslagern der Stückgüter beziehungsweise Waren in das Regal und aus dem Regal.

Aus der EP 0 608 487 A1 ist ferner ein Regalbediengerät gemäß dem Oberbegriff des Anspruchs 1 bekannt, welches in einer Regalgasse entlang beidseits der Regalgasse angeordneter Regale verfährt. Das Regalbediengerät weist zwei Masten auf, welche am unteren und am oberen Ende über Querrahmen miteinander verbunden sind. Zwischen den Masten ist ein vertikal bewegbares Lastaufnahmemittel angeordnet. Im Bereich eines ersten Mastes ist eine Steuereinheit zur Steuerung der Funktionseinheiten des Regalbediengeräts angeordnet. Im Bereich eines zweiten Mastes ist eine Energieversorgungseinheit angeordnet, welche eine Fahrsteuerung zur Horizontalbewegung des Regalbediengeräts und eine Hebesteuerung für die Vertikalbewegung des Lastaufnahmemittels aufweist.

Ein solches Regalbediengerät ist auch aus der EP 2 615 056 A1 und US 2015/225217 A1 bekannt.

Nach der US 2015/225217 A1 umfasst das Regalbediengerät eine Fahrsteuerung zur Horizontalbewegung des Regalbediengeräts und eine Hebesteuerung für die Vertikalbewegung der Lastaufnahmemittel. Diese Steuerung ist zweigeteilt ausgebildet und jeweils am unteren Ende jedes Masts angeordnet.

Auch aus der EP 2 883 831 A1 ist ein Regalbediengerät dieser Art bekannt. Zu beiden Seiten des vertikal bewegbaren Lastaufnahmemittels sind Schaltschränke angeordnet, welche Steuerungskomponenten für das Lastaufnahmemittel aufweisen.

Nachteilig an bekannten Regallagersystemen ist die teils schlechte Zugänglichkeit, die der Kompaktheit eines solchen Regallagersystems geschuldet ist. Häufig sind die Regalgassen so eng, dass ein Passieren des Regalbediengeräts, um auf die andere Seite in der Regalgasse zu gelangen, nicht oder nur sehr schwierig möglich ist. Zudem führen der kompakte Aufbau eines Regalbediengeräts und das Gewicht der damit manipulierten Stückgüter oder Objekte zum Teil zu erheblichen Belastungen in der Struktur des Regalbediengeräts, insbesondere im Bereich des Fahrwerks und der Tragräder.

Eine Aufgabe der Erfindung ist es daher, ein verbessertes Regalbediengerät und ein verbessertes Regallagersystem anzugeben. Insbesondere soll die Zugänglichkeit zu den Ein- und Aufbauten eines Regalbediengeräts und auch der Zugang zu einer Regalgasse verbessert werden. Zudem soll das Regalbediengerät so aufgebaut sein, dass es den auftretenden Belastungen besser gewachsen ist und im Speziellen auch fragiler und damit leichter aufgebaut werden kann. Damit einhergehend sind höhere mögliche Beschleunigungen und Geschwindigkeiten bei gleicher Antriebsleistung.

Die Aufgabe der Erfindung wird durch die Merkmale des Anspruchs 1 gelöst.

Der erste Schaltschrank ist an einer ersten Position angeordnet und der zweite Schaltschrank ist an einer zweiten Position. Insbesondere sind der erste Schaltschrank und der zweite Schaltschrank hinsichtlich ihrer Bauart und/oder Größe unterschiedlich. Im Speziellen ist der erste Schaltschrank größer als der zweite Schaltschrank. Die durch die Steuerelektronik beziehungsweise die Leistungselektronik ausgeführten Funktionen sind ebenfalls unterschiedlich.

Es erweist sich von Vorteil, wenn der zweite Schaltschrank näher an dem zumindest einen Fahrmotor angeordnet ist als der erste Schaltschrank. Da die Steuerelektronik in aller Regel deutlich leichter ist als die Leistungselektronik und der Fahrmotor oder die Fahrmotoren vergleichsweise schwer ist/sind, führt die vorgeschlagene Anordnung zu einer vorteilhaften Gewichtsverteilung am Regalbediengerät.

Die Aufgabe der Erfindung wird auch durch ein Regallagersystem gemäß den Merkmalen des Anspruchs 10 gelöst.

Es erweist sich von Vorteil, wenn eine Höhe einer Oberkante des ersten Schaltschranks und/oder eine Höhe einer Oberkante des zweiten Schaltschranks niedriger als 2,20 m über einem Boden der Regalgasse liegt. Dadurch sind die Einbauten in den Schaltschränken (z.B. elektrische Komponenten und dergleichen) auch ohne zusätzliche Hilfsmittel leicht zugänglich. Damit wird der Aufbau und auch die Wartung eines solchen Regalbediengeräts wesentlich vereinfacht. Insbesondere liegen die Einbauten im Schaltschrank (z.B. Schaltgeräte und dergleichen) nicht höher als 2,00 m über dem Boden der Regalgasse. Darüber hinaus vereinfacht der niedrigere Aufbau auch den Transport eines Regalbediengeräts, beispielsweise in einem Lastkraftwagen. Das Fahrwerk des Regalbediengeräts kann durch die vorgeschlagenen Maßnahmen in der Regel komplett vormontiert und stehend transportiert werden. Die genannten Vorteile werden insbesondere durch die Aufteilung der Leistungselektronik und der Steuerelektronik auf zwei verschiedene Schaltschränke erreicht.

Die Aufgabe der Erfindung wird darüber hinaus mit einem Regallagersystem gemäß den Merkmalen des Anspruchs 11 gelöst.

Insbesondere beträgt

a) der Mindestabstand zwischen dem ersten Regal und dem ersten Schaltschrank maximal 5 cm und der Mindestabstand zwischen dem zweiten Regal und dem ersten Schaltschrank wenigstens 35 cm, wenn eine Breite der Regalgasse in einem Bereich bis inklusive 105 cm liegt, oder

b) der Mindestabstand zwischen dem ersten Regal und dem ersten Schaltschrank beträgt maximal 15 cm und der Mindestabstand zwischen dem zweiten Regal und dem ersten Schaltschrank wenigstens 45 cm, wenn eine Breite der Regalgasse in einem Bereich von mehr als 105 cm bis inklusive 125 cm liegt, oder

c) der Mindestabstand zwischen dem ersten Regal und dem ersten Schaltschrank beträgt maximal 23 cm und der Mindestabstand zwischen dem zweiten Regal und dem ersten Schaltschrank wenigstens 53 cm, wenn eine Breite der Regalgasse in einem Bereich von mehr als 125 cm bis inklusive 145 cm liegt, oder

d) der Mindestabstand zwischen dem ersten Regal und dem ersten Schaltschrank beträgt maximal 30 cm und der Mindestabstand zwischen dem zweiten Regal und dem ersten Schaltschrank wenigstens 60 cm , wenn eine Breite der Regalgasse in einem Bereich über 145 cm liegt.

Alternativ zu dem tabellarisch angegebenen Zusammenhang zwischen dem Mindestabstand zwischen dem ersten Regal und dem ersten Schaltschrank, dem Mindestabstand zwischen dem zweiten Regal und dem ersten Schaltschrank und der Breite der Regalgasse wird der folgende funktionale Zusammenhang vorgeschlagen:

$$b_{1min} \leq 5cm + (b_5\text{-}100cm) \cdot 0.50$$

$$b_{2min} \geq 35cm + (b_5\text{-}100cm) \cdot 0.50$$

wobei $b_{1min}$ den Mindestabstand zwischen dem ersten Regal und dem ersten Schaltschrank angibt, $b_{2min}$ den Mindestabstand zwischen dem zweiten Regal und dem ersten Schaltschrank und $b_5$ die Breite der Regalgasse.

Die vorgeschlagenen Maßnahmen tragen dazu bei, dass die Ein- und Aufbauten eines Regalbediengeräts (z.B. ein Lastaufnahmemittel) und auch die Regalgasse selbst besser zugänglich werden. Dies kann einerseits durch die Aufteilung der Leistungselektronik und der Steuerelektronik in zwei kleinere Schaltschränke erfolgen, andererseits auch durch die asymmetrische Anordnung zumindest des ersten Schaltschranks. Durch die Aufteilung der Leistungselektronik und der Steuerelektronik auf zwei kleinere Schaltschränke wird auch die Gewichtsverteilung des Regalbediengeräts verbessert. Das Regalbediengerät ist daher den im Betrieb auftretenden Belastungen besser gewachsen, beziehungsweise kann fragiler und damit leichter aufgebaut werden. Damit einhergehend sind höhere mögliche Beschleunigungen und Geschwindigkeiten bei gleicher Antriebsleistung.

Darüber hinaus kann durch die ergriffenen Maßnahmen eine EMV-Belastung (Elektromagnetische Verträglichkeit) der Steuerelektronik verringert werden, da die Leistungselektronik an einer anderen Stelle am Regalbediengerät angeordnet wird. Auch das Vorsehen gesonderter (metallener) Schaltschränke trägt zu der angesprochenen Reduzierung der EMV-Belastung bei.

Im Rahmen der Erfindung weist die mit dem Fahrmotor verbundene Leistungselektronik insbesondere eine maximale, erste Leistungsaufnahme von wenigstens 50 kW auf. Weiterhin weist die mit der Leistungselektronik verbundene Steuerelektronik insbesondere eine maximale, zweite Leistungsaufnahme von weniger als 2 kW auf. Die angegebenen Werte treten im Betrieb des Regalbediengeräts auf. "Im Betrieb" bedeutet im Rahmen der Erfindung auch "bei Bewegung des Regalbediengeräts". Insbesondere werden die angegebene Werte für die maximale, erste Leistungsaufnahme beim Beschleunigen des Regalbediengeräts erreicht. Selbstverständlich treten im Betrieb auch andere Lastzustände auf. Beispielsweise wird bei konstanter Fahrt weniger Leistung verbraucht, beziehungsweise kann sich die Leistungsaufnahme auch ins Negative verkehren, wenn das Regalbediengerät rekuperativ gebremst wird.

Die maximale, zweite Leistungsaufnahme kann auch einen Leistungsbedarf für Nebenaggregate oder auch (kleinere) Motoren inkludieren. Der Anschluss kann dabei direkt am zweiten Schaltschrank erfolgen oder auch am ersten Schaltschrank, sofern ein entsprechendes Kabel vom ersten zum zweiten Schaltschrank verlegt ist. Im Speziellen beträgt der Leistungsbedarf, welcher der Leistungselektronik zugeordnet ist, maximal 200 W. Das heißt, die für die Steuerung der Leistungselektronik benötigte elektrische Leistung beträgt insbesondere maximal 200 W.

Vorteilhafte Ausgestaltungen und Weiterbildungen der Erfindung ergeben sich nun aus den Unteransprüchen sowie aus der Beschreibung in Zusammenschau mit den Figuren.

Eine besonders günstige Gewichtsverteilung am Regalbediengerät wird erreicht, wenn der zweite Schaltschrank an allen Fahrmotoren näher angeordnet ist als der erste Schaltschrank.

Günstig ist es auch, wenn das Regalbediengerät ein an einem Mast vertikal verfahrbares Lastaufnahmemittel aufweist. Dadurch können Stückgüter beziehungsweise Waren auch in ein höheres Regal eingelagert und aus diesem ausgelagert werden. Selbstverständlich kann das Regalbediengerät auch mehrere Masten mit jeweils einem Lastaufnahmemittel, mehrere Masten mit einem gemeinsamen Lastaufnahmemittel oder auch Masten mit mehreren Lastaufnahmemitteln aufweisen.

Vorteilhaft ist es in diesem Zusammenhang, wenn der Mast, bezogen auf die Längsrichtung des Regalbediengeräts, zwischen dem ersten Schaltschrank und dem zweiten Schaltschrank angeordnet ist. Die vorgeschlagene Anordnung führt ebenfalls zu einer vorteilhaften Gewichtsverteilung am Regalbediengerät. Dies trifft insbesondere dann zu, wenn der Mast dem ersten Schaltschrank näher liegt als dem zweiten Schaltschrank. Ein weiterer Vorteil der genannten Anordnung ist auch die vergleichsweise geringe EMV-Belastung der im zweiten Schaltschrank angeordneten Steuerelektronik. Der zweite Schaltschrank ist bei dieser Ausführungsform relativ weit von einem Hubmotor für das Lastaufnahmemittel und auch relativ weit von einem eventuell auf dem Lastaufnahmemittel montierten Schaltschrank entfernt.

In einer weiteren Ausführungsvariante des Regalbediengeräts zur Erreichung einer vorteilhaften Gewichtsverteilung ist das Lastaufnahmemittel, auf eine Längsrichtung des Regalbediengeräts bezogen, zwischen dem ersten Schaltschrank und dem zweiten Schaltschrank angeordnet.

Im Hinblick auf die Gewichtsverteilung ist weiterhin von Vorteil, zumindest ein erstes Tragrad an einem Ende des Fahrwerks und zumindest ein zweites Tragrad an dem anderen Ende des Fahrwerks anzuordnen, und den ersten Schaltschrank über dem zumindest ersten Tragrad und den zweiten Schaltschrank über dem zumindest zweiten Tragrad zu montieren.

Im Hinblick auf die Gewichtsverteilung ist schließlich auch von Vorteil, wenn der wenigstens eine Fahrmotor, auf eine Längsrichtung des Regalbediengeräts bezogen, außerhalb eines Zwischenraums zwischen dem zumindest einen ersten Tragrad und dem zumindest einen zweiten Tragrad angeordnet ist.

Nach einer bevorzugten Ausführung sind der erste Schaltschrank und der zweite Schaltschrank am Fahrwerk angeordnet.

Vorteilhaft ist es weiterhin, wenn eine Schaltschranktür des ersten Schaltschranks im geschlossenen Zustand quer zu der Mittellinie der Regalgasse ausgerichtet ist, insbesondere normal dazu. Dadurch wird der Zugang zum ersten Schaltschrank, welcher in der Regel auch nach der Aufteilung der Leistungselektronik und Steuerelektronik vergleichsweise voluminös bleibt, verbessert, insbesondere in schmalen Regalgassen. Bei schwenkbaren Schaltschranktüren verläuft eine Schwenkachse insbesondere vertikal, also normal zur Mittellinie der Regalgasse und parallel zu einem Mast. Alternativ oder zusätzlich kann die Schaltschranktür auch abnehmbar sein.

Besonders vorteilhaft ist es auch, wenn eine Leiter zum Aufstieg auf das Regalbediengerät auf der Schaltschranktür angeordnet ist. Dadurch wird auch der Aufstieg auf ein Regalbediengerät erleichtert, wenn zum Beispiel Wartungsarbeiten im Regallagersystem (z.B. im Regallager oder am Regalbediengerät) erforderlich sind.

Vorteilhaft ist es weiterhin, wenn eine Fördertechnik an einem ersten Ende der Regalgasse angeordnet und mit dem Regallagersystem gekoppelt ist und die Schaltschranktür zu dem ersten Ende der Regalgasse hinweist. Dadurch ist eine gute Zugänglichkeit zum ersten Schaltschrank gewährleistet. Häufig bilden die Regalgassen nämlich Sackgassen, die nur von ihrem ersten Ende zugänglich sind.

Ein weiterer Vorteil der Anordnung des ersten Schaltschranks an jenem Ende des Regalbediengeräts, das dem ersten Ende der Regalgasse zugewandt ist, ist die vorteilhafte Nutzung des zur Verfügung stehenden Platzes. Die Fördertechnik weist in aller Regel Pufferförderer auf, auf denen Förderobjekte beziehungsweise Stückgüter zwischengespeichert werden können, bevor sie auf einen Sammelförderer oder auf das Regalbediengerät übergeben werden. Daher wird am ersten Ende der Regalgasse in deren Verlängerung Platz frei, der durch die vorgeschlagenen Maßnahmen von dem relativ voluminösen ersten Schaltschrank eingenommen wird.

In einer besonders vorteilhaften Ausführungsform umfasst das Regallagersystem eine Steuerung, welche dazu ausgebildet ist, ein Lastaufnahmemittel des Regalbediengeräts automatisch in eine Höhe von mindestens 2 m über einem Boden der Regalgasse zu fahren, wenn ein Zutritt einer Person zu der Regalgasse detektiert wird, in der das besagte Regalbediengerät verfährt. Personen dürfen sich aus Sicherheitsgründen während des Betriebs des Regalbediengeräts nicht in jener Regalgasse befinden, in der das Regalbediengerät verfährt. Entsprechende Sicherheitsbereiche können beispielsweise mit Lichtschranken, Türen und dergleichen abgesichert werden. Bei Detektion eines Zutritts oder Zutrittswunsches der Person wird das Regalbediengerät angehalten. Zusätzlich können die oben vorgeschlagenen Maßnahmen ergriffen werden. Durch das Hochfahren des Lastaufnahmemittels in eine Höhe von mindestens 2 m über dem Boden wird ein Passieren des Regalbediengeräts und der Zugang zu dem hinter dem Regalbediengerät liegenden Gassenabschnitt der Regalgasse erleichtert.

Zum besseren Verständnis der Erfindung wird diese anhand der nachfolgenden Figuren näher erläutert.

Es zeigen jeweils in stark vereinfachter, schematischer Darstellung:

Fig. 1    eine Seitenansicht eines schematisch dargestellten und beispielhaften Regallagersystems;

Fig. 2    eine Draufsicht auf das Regallagersystem aus Fig. 1;

Fig. 3    eine Rückansicht des Regallagersystems aus Fig. 1 von links;

Fig. 4    eine Vorderansicht des Regallagersystems aus Fig. 1 von rechts;

Fig. 5    eine weitere Seitenansicht des Regallagersystems aus Fig. 1;

Fig. 6    eine weitere Draufsicht auf das Regallagersystem aus Fig. 1;

Fig. 7    eine detailliertere Darstellung eines beispielhaften Regalbediengeräts;

Fig. 8    eine Vorderansicht eines Regalbediengeräts mit einer Leiter;

Fig. 9    ein Regallagersystem im Verbund mit einer Fördertechnik und

Fig. 10    ein vereinfachtes, elektrisches Schaltbild des Regalbediengeräts.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und bei einer Lageänderung sinngemäß auf die neue Lage zu übertragen.

Sämtliche Angaben zu Wertebereichen in gegenständlicher Beschreibung sind so zu verstehen, dass diese beliebige und alle Teilbereiche daraus mit umfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7 oder 3,2 bis 8,1 oder 5,5 bis 10.

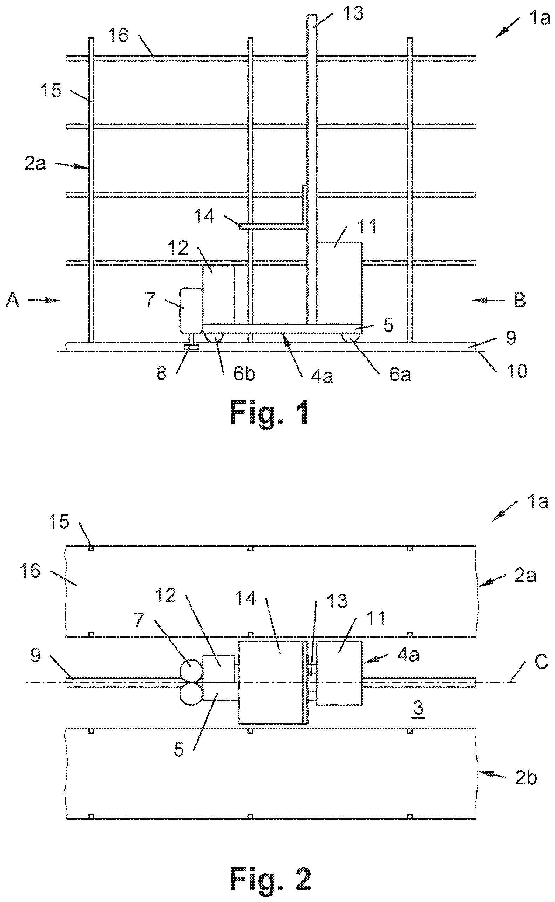

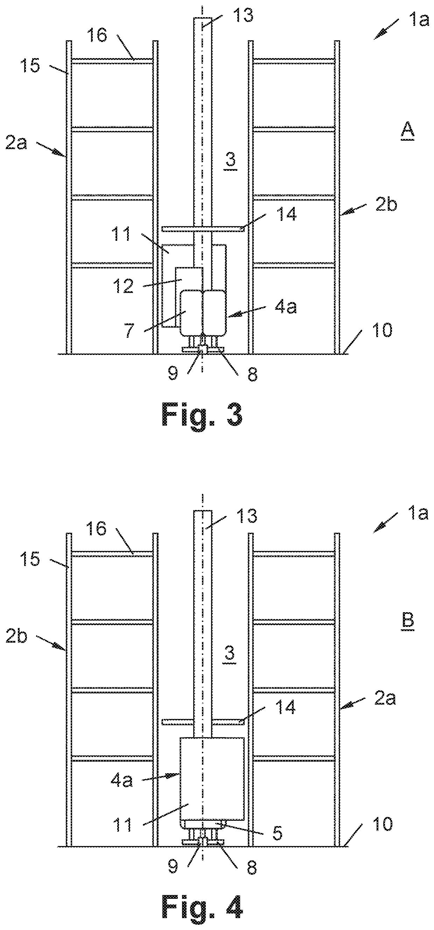

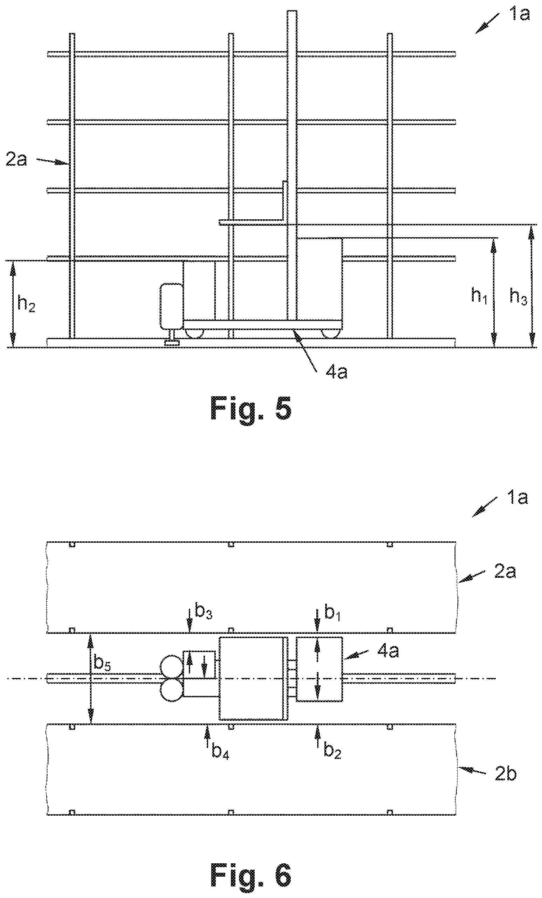

Die Figuren 1 bis 6 zeigen ein Regallagersystem 1a, umfassend ein erstes Regal 2a und ein dazu parallel ausgerichtetes zweites Regal 2b mit einer dazwischen liegenden Regalgasse 3 sowie ein in der Regalgasse 3 verfahrbares Regalbediengerät 4a, welches in eine Übergabeposition bewegbar ist, in der ein Waren- oder Stückguttransfer zwischen dem Regalbediengerät 4a und dem ersten und/oder zweiten Regal 2a, 2b ermöglicht ist. In den Figuren 1 und 5 ist eine Seitenansicht des genannten Regallagersystems 1a dargestellt, in den Figuren 2 und 6 eine Draufsicht, in der Fig. 3 eine Ansicht A von links, in der Fig. 4 eine Ansicht B von rechts.

Das Regalbediengerät 4a umfasst ein Fahrwerk 5 mit mehreren Trägrädern 6a, 6b und wenigstens einen Fahrmotor 7, welcher mit einem Antriebsrad 8 oder mehreren Antriebsrädern des Regalbediengeräts 4a gekoppelt ist. Die Trägräder 6a, 6b laufen auf einer Schiene 9, die auf einem Fussboden 10 (z.B. einer Lagerhalle) montiert ist. Die Schiene 9 ist entlang einer Mittellinie C zwischen den beiden Regalen 2a, 2b angeordnet. Sie könnte aber auch an anderer Stelle montiert sein.

Zudem weist das Regalbediengerät 4a einen ersten Schaltschrank 11 und einen zweiten Schaltschrank 12 auf. Die beiden Schaltschränke 11 und 12 sind räumlich voneinander getrennt am Regalbediengerät 4a angeordnet. Das heißt, der erste Schaltschrank 11 ist an einer ersten Position und der zweite Schaltschrank 12 an einer zweiten Position angeordnet. Konkret sind der erste Schaltschrank 11 und der zweite Schaltschrank 12 in diesem Beispiel am Fahrwerk 5 montiert. Insbesondere sind der erste Schaltschrank 11 und der zweite Schaltschrank 12 hinsichtlich ihrer Bauart und/oder Größe unterschiedlich. Im Speziellen ist der erste Schaltschrank 11 größer als der zweite Schaltschrank 12.

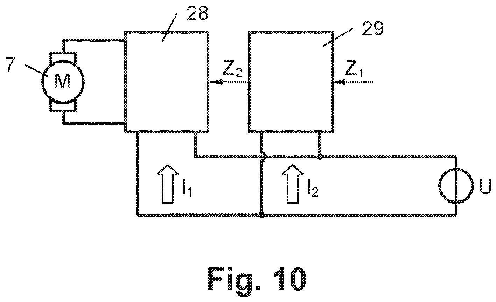

Im ersten Schaltschrank 11 ist eine Leistungselektronik eingebaut, welche elektrisch mit dem zumindest einen Fahrmotor 7 verbunden ist. Im zweiten Schaltschrank 12 ist eine Steuerelektronik eingebaut, welche elektrisch mit der besagten Leistungselektronik verbunden ist. Zwischen dem ersten Schaltschrank 11 und dem zweiten Schaltschrank 12 ist daher ein in den Figuren nicht dargestelltes Kabel verlegt. Die Leistungselektronik weist im Betrieb insbesondere eine maximale, erste Leistungsaufnahme von wenigstens 50 kW auf und die Steuerelektronik insbesondere eine maximale, zweite Leistungsaufnahme von weniger als 2 kW (siehe auch Fig. 10).

Darüber hinaus weist das Regalbediengerät 4a ein an einem Mast 13 vertikal verfahrbares Lastaufnahmemittel 14 auf, mit dem Stückgüter in das Regal 2a, 2b eingelagert oder aus diesem ausgelagert werden können.

Die Regale 2a, 2b weisen schließlich jeweils mehrere Regalsteher 15 auf, an denen Regalböden 16 montiert sind. Das Regalbediengerät 4a kann mit Hilfe der Fahrmotoren 7 in an sich bekannter Weise in der Regalgasse 3 horizontal verfahren. Auch das Lastaufnahmemittel 14 kann in an sich bekannter Weise vertikal verfahren werden. Auf diese Weise kann das Regalbediengerät 4a in eine Übergabeposition bewegt werden, in der ein Waren- oder Stückguttransfer zwischen dem Regalbediengerät 4a und dem ersten und/oder zweiten Regal 2a, 2b mit Hilfe des Lastaufnahmemittels 14 ermöglicht ist.

Gemäß der Erfindung ist der zweite Schaltschrank 12 näher an dem zumindest einen Fahrmotor 7 angeordnet als der erste Schaltschrank 11. Der zweite Schaltschrank 12 ist sogar an allen Fahrmotoren 7 näher angeordnet als der erste Schaltschrank 11.

Außerdem ist der Mast 13 im Hinblick auf die Längsrichtung des Regalbediengeräts 4a zwischen dem ersten Schaltschrank 11 und dem zweiten Schaltschrank 12 angeordnet. Konkret liegt der Mast 13 dem ersten Schaltschrank 11 näher als dem zweiten Schaltschrank 12. Das Lastaufnahmemittel 14 ist, auf eine Längsrichtung des Regalbediengeräts 4a bezogen, zwischen dem ersten Schaltschrank 11 und dem zweiten Schaltschrank 12 angeordnet.

Ein erstes Tragrad 6a ist an einem Ende des Fahrwerks 5 angeordnet und ein zweites Rad 6a an dem anderen Ende des Fahrwerks 5. Der erste Schaltschrank 11 ist über dem ersten Rad 6a montiert und der zweite Schaltschrank 12 über dem zweiten Rad 6b. Die beiden Fahrmotoren 7 sind, auf eine Längsrichtung des Regalbediengeräts 4a bezogen, außerhalb eines Zwischenraums zwischen dem ersten Tragrad 6a und dem zweiten Tragrad 6b angeordnet.

Die oben vorgeschlagenen Positionen der Baueinheiten 5, 6a, 6b, 7, 11, 12, 13 und 14 des Regalbediengeräts 4a führen jeweils einzeln und umso mehr in Summe zu einer vorteilhaften Gewichtsverteilung am Regalbediengerät 4a. Selbstverständlich kann das Regalbediengerät 4a aber auch anders aufgebaut sein als vorgeschlagen.

Beispielsweise sind Bauarten bekannt, die auf zwei am Boden montierten Schienen verfahren sowie Bauarten, die an zwei vertikal übereinander angeordneten Schienen gelagert sind. Auch können direkt die Tragräder angetrieben sein und gesondert vorgesehene Antriebsräder entfallen. Je nach Belastung können auch mehr als zwei Tragräder vorgesehen sein. Auch die Regale 2a, 2b können anders aufgebaut sein als dargestellt. Beispielsweise können Regalböden entfallen und stattdessen Träger vorgesehen sein, auf welche die Stückgüter abgestellt werden. Die oben vorgeschlagenen Maßnahmen sind selbstverständlich unabhängig von einer speziellen Bauart des Regallagersystems 1a anwendbar.

In einem real ausgeführten Regallagersystem 1a beträgt das Gewicht des ersten Schaltschranks 11 rund 200 kg, das Gewicht des zweiten Schaltschranks 12 rund 80 kg und das Gewicht der Fahrmotoren 7 rund 250 kg. Dadurch ergibt sich eine relativ gleichmäßige Belastung der Tragräder 6a, 6b. Dies wird auch dadurch weiter unterstützt, dass die Fahrmotoren 7 außerhalb eines Zwischenraums zwischen dem ersten Tragrad 6a und dem zweiten Tragrad 6b angeordnet sind, und auch der Mast 13 dem ersten Schaltschrank 11 näher liegt.

Vorteilhaft liegt die Oberkante des ersten Schaltschranks 11 und/oder zweiten Schaltschranks 12 nicht höher als 2,20 m über dem Boden 10. In der Fig. 5 ist dem besseren Verständnis halber die Höhe $h_1$ der Oberkante des ersten Schaltschranks 11 über dem Boden 10 und die Höhe $h_2$ der Oberkante des zweiten Schaltschranks 12 über dem Boden 10 dargestellt. Auf diese Weise sind die Einbauten (z.B. elektrische Komponenten) in den Schaltschränken 11 und 12 auch ohne Aufstiegshilfe gut zugänglich. Eine Absturzsicherung kann ebenfalls entfallen. Grundsätzlich ist die angegebene maximale Höhe für den ersten Schaltschrank 11 und/oder zweiten Schaltschrank 12 auch dann zweckmäßig, wenn nicht die weiter oben sowie in Anspruch 1 definierte Aufteilung der Leistungselektronik und der Steuerelektronik vorliegt.

Vorteilhaft ist der erste Schaltschrank 11 im Hinblick auf die in der Regalgasse 3 verlaufende Mittellinie C asymmetrisch angeordnet, so wie das in der Fig. 6 dargestellt ist. In der Fig. 6 ist zusätzlich der Abstand $b_1$ des ersten Schaltschranks 11 zum ersten Regal 2a, der Abstand $b_2$ des ersten Schaltschranks 11 zum zweiten Regal 2b, der Abstand $b_3$ des zweiten Schaltschranks 12 zum ersten Regal 2a und der Abstand $b_4$ des zweiten Schaltschranks 12 zum zweiten Regal 2b sowie die Breite $b_5$ der Regalgasse 3 eingetragen.

In einem beispielhaften, real ausgeführtem Regallagersystem 1a liegen folgende Verhältnisse vor: die Breite $b_5$ der Regalgasse 3 beträgt 100 cm, die Breite des ersten Schaltschranks 11 beträgt 60 cm, der Abstand $b_1$ beträgt 5 cm, und der Abstand $b_2$ beträgt 35 cm. Trotz der relativ schmalen Regalgasse 3 kann eine Person das Regalbediengerät 4a passieren und den dahinter liegenden Abschnitt der Regalgasse 3 erreichen. Dies wird einerseits dadurch erreicht, dass die Leistungselektronik und die Steuerelektronik auf die beiden Schaltschränke 11 und 12 aufgeteilt wird und der erste Schaltschrank 11 somit schmaler ausgeführt werden kann, andererseits auch dadurch, dass der erste Schaltschrank 11 asymmetrisch in der Regalgasse 3 angeordnet wird. Je nach Breite der Regalgasse 3 und der Breite des ersten Schaltschranks 11 kann auch nur eine der beiden Maßnahmen ausreichend sein. Die für den ersten Schaltschrank 11 ergriffenen Maßnahmen können natürlich auch für den zweiten Schaltschrank 12 vorgesehen sein. Vorteilhaft beträgt daher auch der Abstand $b_4$ zumindest 35 cm.

Generell ist es von Vorteil, wenn

a) der Mindestabstand $b_1$ zwischen dem ersten Regal 2a und dem ersten Schaltschrank 11 maximal 5 cm und der Mindestabstand $b_2$ zwischen dem zweiten Regal 2b und dem ersten Schaltschrank 11 wenigstens 35 cm beträgt, wenn eine Breite $b_5$ der Regalgasse 3 in einem Bereich bis inklusive 105 cm liegt, oder

b) der Mindestabstand $b_1$ zwischen dem ersten Regal 2a und dem ersten Schaltschrank 11 maximal 15 cm und der Mindestabstand $b_2$ zwischen dem zweiten Regal 2b und dem ersten Schaltschrank 11 wenigstens 45 cm beträgt, wenn eine Breite $b_5$ der Regalgasse 3 in einem Bereich von mehr als 105 cm bis inklusive 125 cm liegt, oder

c) der Mindestabstand $b_1$ zwischen dem ersten Regal 2a und dem ersten Schaltschrank 11 maximal 23 cm und der Mindestabstand $b_2$ zwischen dem zweiten Regal 2b und dem ersten Schaltschrank 11 wenigstens 53 cm beträgt, wenn eine Breite $b_5$ der Regalgasse 3 in einem Bereich von mehr als 125 cm bis inklusive 145 cm liegt, oder

d) der Mindestabstand $b_1$ zwischen dem ersten Regal 2a und dem ersten Schaltschrank 11 maximal 30 cm und der Mindestabstand $b_2$ zwischen dem zweiten Regal 2b und dem ersten Schaltschrank 11 wenigstens 60 cm beträgt, wenn eine Breite $b_5$ der Regalgasse 3 in einem Bereich über 145 cm liegt

Alternativ wird der folgende funktionale Zusammenhang vorgeschlagen:

$$b_{1min} \le 5cm + (b_5 - 100cm) \cdot 0.50$$

$$b_{2min} \ge 35cm + (b_5 - 100cm) \cdot 0.50$$

wobei $b_{1min}$ den Mindestabstand zwischen dem ersten Regal 2a und dem ersten Schaltschrank 11 angibt, $b_{2min}$ den Mindestabstand zwischen dem zweiten Regal 2b und dem ersten Schaltschrank 11 und $b_5$ die Breite der Regalgasse 3.

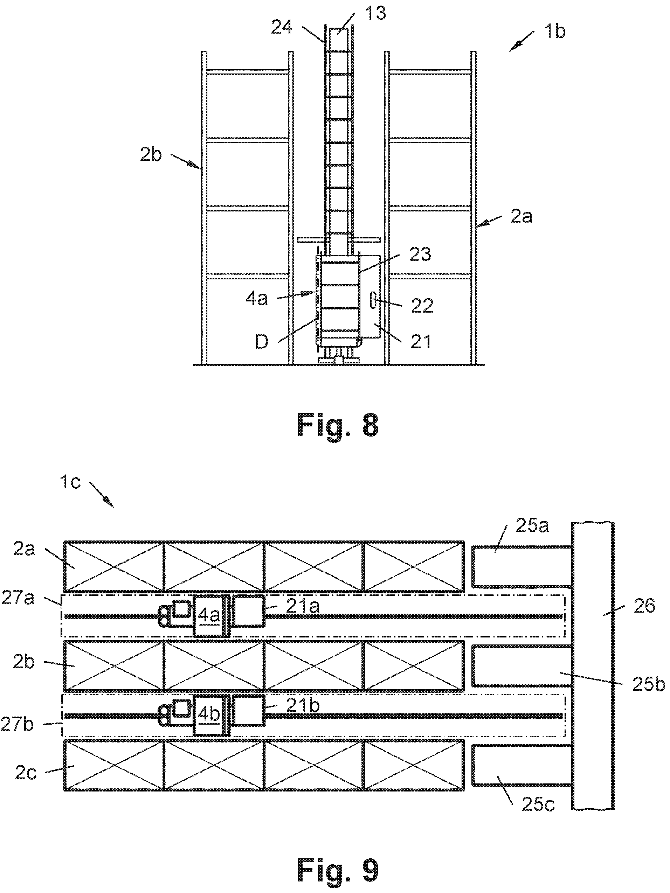

Insbesondere ist es auch von Vorteil, wenn eine Steuerung des Regallagersystems 1a dazu ausgebildet ist, das Lastaufnahmemittel 14 des Regalbediengeräts 4a automatisch in eine Höhe $h_3$ von mindestens 2 m über dem Boden 10 zu fahren, wenn ein Zutritt einer Person in die Regalgasse 3 detektiert wird, in der das besagte Regalbediengerät 4a verfährt (siehe dazu auch Fig. 9).

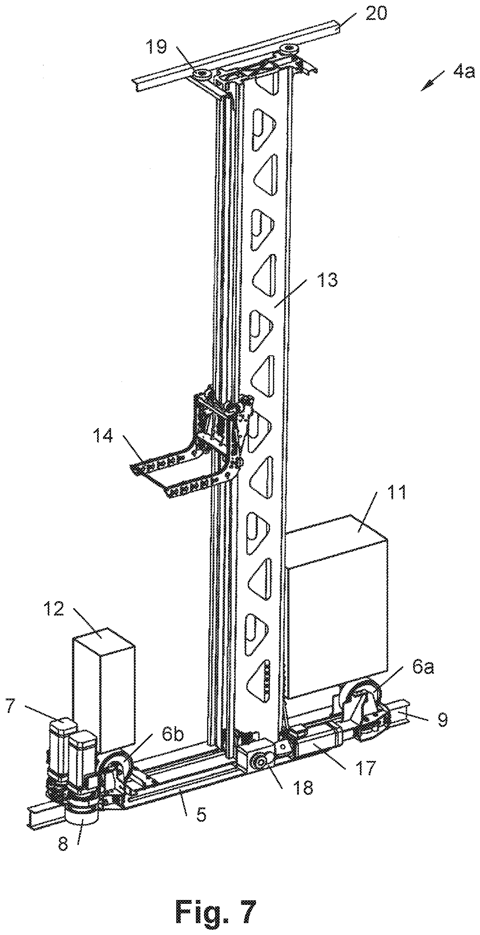

Fig. 7 zeigt nun eine etwas detailliertere Darstellung eines Regalbediengeräts 4a. Insbesondere sind auch ein Hubmotor 17 samt angeflanschtem Getriebe 18 dargestellt. Weiterhin sind in der Fig. 7 untere Seitenführungsräder 19a dargestellt, die seitlich an der Schiene 9 anliegen, sowie obere Seitenführungsräder 19b, die in einer am Regal 2a, 2b montierten Führungsschiene 20 laufen. Das Lastaufnahmemittel 14 ist in diesem Beispiel durch eine schematisch dargestellte, teleskopierbare Gabel gebildet. Das Lastaufnahmemittel 14 kann insbesondere auf beide Seiten verfahrbar sein, sodass beide Regale 2a und 2b bedient werden können.

Generell ist es von Vorteil wenn eine Schaltschranktür 21 des ersten Schaltschranks 11 im geschlossenen Zustand quer zu der in der Regalgasse 3 verlaufenden Mittellinie C ausgerichtet ist, insbesondere normal dazu, so wie dies in der Fig. 8 der Fall ist. Konkret ist die Schaltschranktür 21 um eine Achse D schwenkbar und mit einem Griff 22 öffenbar. In der Fig. 8 ist die Achse D senkrecht beziehungsweise normal zur Mittellinie C und parallel zum Mast 13 ausgerichtet. Grundsätzlich könnte die Achse D aber auch horizontal ausgerichtet sein, sodass die Schaltschranktür 21 nach oben oder unten schwenkt. Alternativ oder zusätzlich kann die Schaltschranktür 21 auch abnehmbar sein.

In der Fig. 8 ist zudem eine auf der Schaltschranktür 21 montierte Leiter 23 dargestellt, mit der ein Aufstieg auf das Regalbediengerät 4a möglich ist. Der Aufstieg kann zudem über eine Leiter 24 fortgesetzt werden, die auf dem Mast 13 montiert ist.

Fig. 9 zeigt ein Regallagersystem 1c mit drei Regalen 2a..2c und zwei Regalbediengeräten 4a, 4b im Verbund mit einer Fördertechnik, die an einem ersten Ende der Regalgassen 3 angeordnet und mit dem Regallagersystem 1c gekoppelt ist. Konkret umfasst die Fördertechnik in diesem Beispiel drei Pufferförderer 25a..25c, welche mit einem Sammelförderer 26 gekoppelt sind. Mit Hilfe dieser Fördertechnik können Stückgüter in an sich bekannter Weise zum Regallagersystem 1c transportiert werden oder von diesem weg. Vorteilhaft weisen die Schaltschranktüren 21a, 21b zum ersten Ende der Regalgassen hin, an dem die Fördertechnik angekoppelt ist. Dadurch ist eine gute Zugänglichkeit zum ersten Schaltschrank 11 gewährleistet. Häufig bilden die Regalgassen 3 Sackgassen, die nur von ihrem ersten Ende zugänglich sind.

Ein weiteres Merkmal der Anordnung des ersten Schaltschranks 11 auf jenem Ende des Regalbediengeräts 4a, 4b, das dem ersten Ende der Regalgasse 3 zugewandt ist, ist eine vorteilhafte Nutzung des zur Verfügung stehenden Platzes. Auf den Pufferförderern 25a..25c können Stückgüter zwischengespeichert werden, bevor sie auf den Sammelförderer 26 oder auf das Regalbediengerät 4a, 4b übergeben werden. Der durch die Pufferförderer 25a..25c am ersten Ende der Regalgasse 3 frei werdende Platz wird durch die vorgeschlagenen Maßnahmen vom relativ voluminösen ersten Schaltschrank 11 eingenommen.

In der Fig. 9 sind auch Sicherheitsbereiche 27a und 27b eingezeichnet, in denen sich Personen während dem Betrieb der Regalbediengeräte 4a und 4b nicht aufhalten dürfen. Die Sicherheitsbereiche 27a und 27b können in an sich bekannter Weise mit Lichtschranken, Türen und dergleichen abgesichert werden, wobei die Regalbediengeräte 4a und 4b bei Detektion eines Zutritts oder Zutrittswunsches einer Person angehalten werden.

Beispielsweise kann sich am linken Ende einer Regalgasse 3 eine Betriebstüre befinden, über welche die Regalgasse 3 für Wartungsarbeiten und dergleichen betreten werden kann, und am rechten Ende eine Fluchttüre, über welche die Regalgasse 3 im Notfall verlassen werden kann.

Zusätzlich kann vorteilhaft vorgesehen sein, dass das Lastaufnahmemittel 14 eines Regalbediengeräts 4a, 4b automatisch in eine Höhe $h_3$ von mindestens 2m über dem Boden 10 gefahren wird, wenn ein Zutritt einer Person in die Regalgasse 3 respektive zu dem Sicherheitsbereich 27a, 27b detektiert wird (siehe dazu auch Fig. 5). Auf diese Weise wird ein Passieren des Regalbediengeräts 4a, 4b erleichtert.

Fig. 10 zeigt schließlich ein vereinfachtes, elektrisches Schaltbild des Regalbediengeräts 4a, 4b. Konkret zeigt das Schaltbild den Motor 7, eine damit verbundene Leistungselektronik 28 (welche im ersten Schaltschrank 11 eingebaut ist) und eine mit der Leistungselektronik 28 verbundene Steuerelektronik 29 (welche im zweiten Schaltschrank 12 eingebaut ist). Die Leistungselektronik 28 und die Steuerelektronik 29 sind an eine Spannungsquelle U angeschlossen.

Die Steuerelektronik 29 empfängt in an sich bekannter Weise Steuerbefehle $Z_1$ von einer nicht dargestellten zentralen Steuerung, setzt diese Steuerbefehle $Z_1$ um und schickt ihrerseits Steuerbefehle $Z_2$ an die Leistungselektronik 28. Die Leistungselektronik 28 steuert in Folge den Motor 7 an. Die Steuerbefehle $Z_1$ und $Z_2$ können jeweils drahtlos oder drahtgebunden übertragen werden.

Eine maximale, erste Leistungsaufnahme $P_1$ der Leistungselektronik 28 beträgt in den in den Figuren dargestellten Beispielen insbesondere wenigstens 50 kW. Eine maximale, zweite Leistungsaufnahme $P_2$ der Steuerelektronik 29 beträgt in den in den Figuren dargestellten Beispielen insbesondere weniger als 2 kW.

In der Fig. 10 sind die Leistungselektronik 28 und die Steuerelektronik 29 an die gleiche Spannung angeschlossen. Dies ist natürlich keine notwendige Bedingung für die Erfindung. Selbstverständlich können die Leistungselektronik 28 und die Steuerelektronik 29 auch an verschiedene Spannungen angeschlossen sein. Beispielsweise kann die Leistungselektronik 28 an eine Spannung von 400 V und die Steuerelektronik 29 an eine Spannung von 24 V angeschlossen sein. Selbstverständlich kann im zweiten Schaltschrank 12 auch ein Spannungswandler eingebaut sein, der beispielsweise aus einer Spannung von 400 V eine Spannung von 24 V erzeugt.

Abschließend wird festgehalten, dass der Schutzbereich durch die Patentansprüche bestimmt ist. Die Beschreibung und die Zeichnungen sind jedoch zur Auslegung der Ansprüche heranzuziehen.

Insbesondere wird auch festgehalten, dass die dargestellten Vorrichtungen in der Realität auch mehr oder auch weniger Bestandteile als dargestellt umfassen können. Teilweise können die dargestellten Vorrichtungen beziehungsweise deren Bestandteile auch unmaßstäblich und/oder vergrößert und/oder verkleinert dargestellt sein.

**Bezugszeichenaufstellung**

| | | | |
|---|---|---|---|
| 1a..1c | Regallagersystem | $P_1$ | Leistungsaufnahme Leistungselekt-ronik |
| 2a..2c | Regal | | |
| 3 | Regalgasse | $P_2$ | Leistungsaufnahme Steuerelektronik |
| 4a, 4b | Regalbediengerät | | |
| 5 | Fahrwerk | $b_1$ | Abstand zwischen erstem Schaltschrank und erstem Regal |
| 6a, 6b | Tragrad | $b_2$ | Abstand zwischen erstem Schalt-schrank und zweitem Regal |
| 7 | Fahrmotor | | |
| 8 | Antriebsrad | $b_3$ | Abstand zwischen zweitem Schalt-schrank und erstem Regal |
| 9 | Schiene | | |
| 10 | Fussboden | $b_4$ | Abstand zwischen zweitem Schaltschrank und zweitem Regal |
| 11 | erster Schaltschrank | $b_5$ | Breite Regalgasse |
| 12 | zweiter Schaltschrank | | |
| 13 | Mast | $h_1$ | Höhe der Oberkante des ersten Schaltschranks über dem Boden |
| 14 | Lastaufnahmemittel | | |
| 15 | Regalsteher | $h_2$ | Höhe der Oberkante des zweiten Schaltschranks über dem Boden |
| 16 | Regalboden | $h_3$ | Höhe der Unterkante des Lastauf-nahmemittels über dem Boden |
| 17 | Hubmotor | | |

(fortgesetzt)

| 18 | Getriebe |
|---|---|
| 19a, 19b | unteres und oberes Seitenführungsrad |
| 20 | Führungsschiene |
| 21.. 21b | Schaltschranktür |
| 22 | Griff |
| 23 | Schrankleiter |
| 24 | Mastleiter |
| 25a..25c | Pufferförderer |
| 26 | Sammelförderer |
| 27a, 27b | Sicherheitsbereich |
| 28 | Leistungselektronik |
| 29 | Steuerelektronik |
| A | Seitenansicht von links |
| B | Seitenansicht von rechts |
| C | Mittellinie der Regalgasse |
| D | Drehachse Schaltschranktür |
| $Z_1$ | Steuerbefehl von zentraler Steuerung |
| $Z_2$ | Steuerbefehl von Steuerelektronik |

## Patentansprüche

1. Regalbediengerät (4a, 4b) für ein Regallagersystem (1a..1c), umfassend

- ein Fahrwerk (5),
- wenigstens einen Fahrmotor (7), welcher mit einem Antriebsrad (8) oder mehreren Antriebsrädern des Regalbediengeräts (4a, 4b) gekoppelt ist,
- eine Leistungselektronik (28), welche mit dem zumindest einen Fahrmotor (7) verbunden ist, und
- eine Steuerelektronik (29), welche mit der Leistungselektronik (28) verbunden ist,
wobei die Leistungselektronik (28) in einem ersten Schaltschrank (11) und die Steuerelektronik (29) in einem zweiten Schaltschrank (12) eingebaut ist und beide Schaltschränke (11, 12) räumlich voneinander getrennt am Regalbediengerät (4a, 4b) angeordnet sind,
**dadurch gekennzeichnet, dass**
der zweite Schaltschrank (12) näher an dem zumindest einen Fahrmotor (7) angeordnet ist als der erste Schaltschrank (11).

2. Regalbediengerät (4a, 4b) nach Anspruch 1, **dadurch gekennzeichnet, dass** der zweite Schaltschrank (12) an allen Fahrmotoren (7) näher angeordnet ist als der erste Schaltschrank (11).

3. Regalbediengerät (4a, 4b) nach Anspruch 1, **gekennzeichnet durch** ein an einem Mast (13) vertikal verfahrbares Lastaufnahmemittel (14).

4. Regalbediengerät (4a, 4b) nach Anspruch 3, **dadurch gekennzeichnet, dass** der Mast (13), bezogen auf eine Längsrichtung des Regalbediengeräts (4a, 4b), zwischen dem ersten Schaltschrank (11) und dem zweiten Schaltschrank (12) angeordnet ist.

5. Regalbediengerät (4a, 4b) nach Anspruch 3 oder 4, **dadurch gekennzeichnet, dass** der Mast (13) dem ersten Schaltschrank (11) näher liegt als dem zweiten Schaltschrank (12).

6. Regalbediengerät (4a, 4b) nach Anspruch 5, **dadurch gekennzeichnet, dass** das am Mast (13) gelagerte Lastaufnahmemittel (14), auf eine Längsrichtung des Regalbediengeräts (4a, 4b) bezogen, zwischen dem ersten Schalt-

schrank (11) und dem zweiten Schaltschrank (12) angeordnet ist.

7. Regalbediengerät (4a, 4b) nach einem der Ansprüche 1 bis 6, **dadurch gekennzeichnet, dass** zumindest ein erstes Tragrad (6a) an einem Ende des Fahrwerks (5) und zumindest ein zweites Tragrad (6b) an dem anderen Ende des Fahrwerks (5) angeordnet ist und der erste Schaltschrank (11) über dem zumindest ersten Tragrad (6a) und der zweite Schaltschrank (12) über dem zumindest zweiten Tragrad (6b) montiert ist.

8. Regalbediengerät (4a, 4b) nach Anspruch 7, **dadurch gekennzeichnet, dass** der wenigstens eine Fahrmotor (7), auf eine Längsrichtung des Regalbediengeräts (4a, 4b) bezogen, außerhalb eines Zwischenraums zwischen dem zumindest einen ersten Tragrad (6a) und dem zumindest einen zweiten Tragrad (6b) angeordnet ist.

9. Regalbediengerät (4a, 4b) nach Anspruch 1, **dadurch gekennzeichnet, dass** der erste Schaltschrank (11) und der zweite Schaltschrank (12) am Fahrwerk (5) angeordnet sind.

10. Regallagersystem (1a, 1b), umfassend ein erstes Regal (2a) und ein dazu parallel ausgerichtetes zweites Regal (2b) mit einer dazwischen liegenden Regalgasse (3), **gekennzeichnet durch** ein in der Regalgasse (3) verfahrbares Regalbediengerät (4a, 4b) nach einem der Ansprüche 1 bis 9, welches in eine Übergabeposition bewegbar ist, in der ein Warentransfer zwischen dem Regalbediengerät (4a) und dem ersten und/oder zweiten Regal (2a, 2b) ermöglicht ist, wobei eine Höhe ($h_1$) einer Oberkante des ersten Schaltschranks (11) und/oder eine Höhe ($h_2$) einer Oberkante des zweiten Schaltschranks (12) niedriger als 2,20 m über einem Boden (10) der Regalgasse (3) liegt.

11. Regallagersystem (1a, 1b), umfassend ein erstes Regal (2a) und ein dazu parallel ausgerichtetes zweites Regal (2b) mit einer dazwischen liegenden Regalgasse (3), **gekennzeichnet durch** ein in der Regalgasse (3) verfahrbares Regalbediengerät (4a, 4b) nach einem der Ansprüche 1 bis 9, welches in eine Übergabeposition bewegbar ist, in der ein Waren- oder Stückguttransfer zwischen dem Regalbediengerät (4a) und dem ersten und/oder zweiten Regal (2a, 2b) ermöglicht ist,

> wobei die Schaltschränke (11, 12) räumlich voneinander getrennt am Regalbediengerät (4a, 4b) angeordnet sind,
> wobei der erste Schaltschrank (11) im Hinblick auf eine in der Regalgasse (3) verlaufende Mittellinie (C) asymmetrisch angeordnet ist und wobei der erste Schaltschrank (11) mit einem ersten Mindestabstand ($b_1$) zum ersten Regal (2a) und mit einem zweiten Mindestabstand ($b_2$) zum zweiten Regal (2a) angeordnet ist,
> wobei der zweite Mindestabstand ($b_2$) größer ist als der erste Mindestabstand ($b_1$) und zumindest 35 cm beträgt.

12. Regallagersystem (1a, 1b) nach Anspruch 11, **dadurch gekennzeichnet, dass** eine Schaltschranktür (21, 21a, 21b) des ersten Schaltschranks (11) im geschlossenen Zustand quer zu der genannten Mittellinie (C) ausgerichtet ist.

13. Regallagersystem (1a, 1b) nach Anspruch 11 oder 12, **dadurch gekennzeichnet, dass** eine Leiter (23) zum Aufstieg auf das Regalbediengerät (4a, 4b) auf einer/der Schaltschranktür (21, 21a, 21b) des ersten Schaltschranks (11) angeordnet ist.

14. Regallagersystem (1a, 1b) nach einem der Ansprüche 12 bis 13, **dadurch gekennzeichnet, dass** eine Fördertechnik (25a..25c, 26) an einem ersten Ende der Regalgasse (3) angeordnet und mit dem Regallagersystem (1a, 1b) gekoppelt ist und dass die Schaltschranktür (21, 21a, 21b) zu dem ersten Ende der Regalgasse (3) hinweist.

15. Regallagersystem (1a, 1b) nach einem der Ansprüche 11 bis 14, **gekennzeichnet durch** eine Steuerung, welche dazu ausgebildet ist, ein Lastaufnahmemittel (14) des Regalbediengeräts (4a, 4b) automatisch in eine Höhe ($h_3$) von mindestens 2 m über einem Boden (10) der Regalgasse (3) zu fahren, wenn ein Zutritt einer Person in die Regalgasse (3) detektiert wird, in der das besagte Regalbediengerät (4a, 4b) verfährt.

## Claims

1. A storage and retrieval device (4a, 4b) for a rack storage system (1a..1c), comprising

> - a chassis (5),
> - at least one drive motor (7), which is coupled to one drive wheel (8) or to a plurality of drive wheels of the storage and retrieval device (4a, 4b),

- a power electronics unit (28), which is connected to the at least one drive motor (7), and
- a control electronics unit (29), which is connected to the power electronics unit (28),
wherein the power electronics unit (28) is installed in a first control cabinet (11) and the control electronics unit (29) is installed in a second control cabinet (12) and both control cabinets (11, 12) are arranged spatially separated from each other on the storage and retrieval device (4a, 4b),
**characterized in that**
the second control cabinet (12) is arranged closer to the at least one drive motor (7) than the first control cabinet (11).

2. The storage and retrieval device (4a, 4b) according to claim 1, **characterized in that** the second control cabinet (12) is arranged closer to all drive motors (7) than the first control cabinet (11).

3. The storage and retrieval device (4a, 4b) according to claim 1, **characterized by** a load handling device (14) which can be moved vertically on a mast (13).

4. The storage and retrieval device (4a, 4b) according to claim 3, **characterized in that** the mast (13) is arranged between the first control cabinet (11) and the second control cabinet (12) with respect to a longitudinal direction of the storage and retrieval device (4a, 4b).

5. The storage and retrieval device (4a, 4b) according to claim 3 or 4, **characterized in that** the mast (13) is located closer to the first control cabinet (11) than to the second control cabinet (12).

6. The storage and retrieval device (4a, 4b) according to claim 5, **characterized in that** the load handling device (14) mounted on the mast (13) is arranged between the first control cabinet (11) and the second control cabinet (12) with respect to a longitudinal direction of the storage and retrieval device (4a, 4b).

7. The storage and retrieval device (4a, 4b) according to one of claims 1 to 6, **characterized in that** at least one first supporting wheel (6a) is arranged at one end of the chassis (5) and at least one second supporting wheel (6b) is arranged at the other end of the chassis (5), and the first control cabinet (11) is mounted above the at least first supporting wheel (6a) and the second control cabinet (12) is mounted above the at least second supporting wheel (6b).

8. The storage and retrieval device (4a, 4b) according to claim 7, **characterized in that** the at least one drive motor (7), with respect to a longitudinal direction of the storage and retrieval device (4a, 4b), is arranged outside an intermediate space between the at least one first supporting wheel (6a) and the at least one second supporting wheel (6b).

9. The storage and retrieval device (4a, 4b) according to claim 1, **characterized in that** the first control cabinet (11) and the second control cabinet (12) are arranged on the chassis (5).

10. A rack storage system (1a, 1b) comprising a first rack (2a) and a second rack (2b) aligned parallel thereto with a rack aisle (3) located therebetween, **characterized by** a storage and retrieval device (4a, 4b) according to one of claims 1 to 9 which is movable in the rack aisle (3) and which is movable into a transfer position in which a transfer of articles between the storage and retrieval device (4a) and the first and/or second rack (2a, 2b) is enabled, wherein a height ($h_1$) of an upper edge of the first control cabinet (11) and/or a height ($h_2$) of an upper edge of the second control cabinet (12) is lower than 2.20 m above a floor (10) of the rack aisle (3).

11. The rack storage system (1a, 1b) comprising a first rack (2a) and a second rack (2b) aligned parallel thereto with a rack aisle (3) located therebetween, **characterized by** a storage and retrieval device (4a, 4b) according to one of claims 1 to 9 which is movable in the rack aisle (3) and which is movable into a transfer position in which a transfer of articles or unit loads between the storage and retrieval device (4a) and the first and/or second rack (2a, 2b) is enabled,
wherein the control cabinets (11, 12) are arranged spatially separated from one another on the storage and retrieval device (4a, 4b),

wherein the first control cabinet (11) is arranged asymmetrically with respect to a center line (C) extending in the rack aisle (3) and wherein the first control cabinet (11) is arranged at a first minimum distance ($b_1$) from the first rack (2a) and at a second minimum distance ($b_2$) from the second rack (2a),
wherein the second minimum distance ($b_2$) is greater than the first minimum distance ($b_1$) and is at least 35 cm.

**12.** The rack storage system (1a, 1b) according to claim 11, **characterized in that** a control cabinet door (21, 21a, 21b) of the first control cabinet (11) is aligned transversely to said center line (C) in the closed state.

**13.** The rack storage system (1a, 1b) according to claim 11 or 12, **characterized in that** a ladder (23) for climbing onto the storage and retrieval device (4a, 4b) is arranged on a/the control cabinet door (21, 21a, 21b) of the first control cabinet (11).

**14.** The rack storage system (1a, 1b) according to one of claims 12 to 13, **characterized in that** a conveying system (25a..25c, 26) is arranged at a first end of the rack aisle (3) and coupled to the rack storage system (1a, 1b) and that the control cabinet door (21, 21a, 21b) points towards the first end of the rack aisle (3).

**15.** The rack storage system (1a, 1b) according to one of claims 11 to 14, **characterized by** a controller which is configured to automatically move a load handling device (14) of the storage and retrieval device (4a, 4b) to a height ($h_3$) of at least 2 m above a floor (10) of the rack aisle (3) when a person is detected entering the rack aisle (3) in which said storage and retrieval device (4a, 4b) is moving.

## Revendications

**1.** Transstockeur (4a, 4b) pour un système de stockage à rayonnages (1a... 1c) comprenant

- un train de roulement (5),
- au moins un moteur de translation (7) qui est couplé avec une roue d'entraînement (8) ou plusieurs roues d'entraînement du transstockeur (4a, 4b),
- une électronique de puissance (28), qui est reliée avec l'au moins un moteur de translation (7) et
- une électronique de commande (29) qui est reliée avec l'électronique de puissance (28),

dans lequel l'électronique de puissance (28) est intégrée dans une première armoire de commande (11) et l'électronique de commande (29) est intégrée dans une deuxième armoire de commande (12) et les deux armoires de commande (11, 12) sont disposées de manière séparée physiquement sur le transstockeur (4a, 4b),
**caractérisé en ce que**
la deuxième armoire de commande (12) est disposée plus près de l'au moins un moteur de translation (7) que la première armoire de commande (11).

**2.** Transstockeur (4a, 4b) selon la revendication 1, **caractérisé en ce que** la deuxième armoire de commande (12) est disposée plus près que tous les moteurs de translation (7) que la première armoire de commande (11).

**3.** Transstockeur (4a, 4b) selon la revendication 1, **caractérisé par** un dispositif de levage (14) mobile verticalement sur un mât (13).

**4.** Transstockeur (4a, 4b) selon la revendication 3, **caractérisé en ce que** le mât (13), par rapport à une direction longitudinale du transstockeur (4a, 4b), est disposé entre la première armoire de commande (11) et la deuxième armoire de commande (12).

**5.** Transstockeur (4a, 4b) selon la revendication 3 ou 4, **caractérisé en ce que** le mât (13) est plus proche de la première armoire de commande (11) que de la deuxième armoire de commande (12).

**6.** Transstockeur (4a, 4b) selon la revendication 5, **caractérisé en ce que** le dispositif de levage (14) logé au niveau du mât (13), par rapport à une direction longitudinale du transstockeur (4a, 4b), est disposé entre la première armoire de commande (11) et la deuxième armoire de commande (12).

**7.** Transstockeur (4a, 4b) selon l'une des revendications 1 à 6, **caractérisé en ce qu'**au moins une première roue porteuse (6a) est disposée à une extrémité du train de roulement (5) et au moins une deuxième roue porteuse (6b) est disposé à l'autre extrémité du train de roulement (5) et la première armoire de commande (11) est montée au-dessus de l'au moins une première roue porteuse (6a) et la deuxième armoire de commande (12) est montée au-dessus de l'au moins une deuxième roue porteuse (6b).

**8.** Transstockeur (4a, 4b) selon la revendication 7, **caractérisé en ce que** l'au moins un moteur de translation (7), par rapport à une direction longitudinale du transstockeur (4a, 4b), est disposé à l'extérieur d'un espace intermédiaire entre l'au moins une première roue porteuse (6a) et l'au moins une deuxième roue porteuse (6b).

9. Transstockeur (4a, 4b) selon la revendication 1, **caractérisé en ce que** la première armoire de commande (11) et la deuxième armoire de commande (12) sont disposées sur le train de roulement (5).

10. Système de stockage à rayonnages (1a, 1b) comprenant un premier rayonnage (2a) et un deuxième rayonnage (2b) orienté parallèlement à celui-ci, avec une allée de rayonnages (3) se trouvant entre eux, **caractérisé par** un transstockeur (4a, 4b), mobile dans l'allée de rayonnages (3), selon l'une des revendications 1 à 9, qui peut être déplacé vers une position de transfert dans laquelle un transfert de marchandises est possible entre le transstockeur (4a) et le premier et/ou le deuxième rayonnage (2a, 2b), dans lequel une hauteur ($h_1$) d'une arête supérieure de la première armoire de commande (11) et/ou une hauteur ($h_2$) d'une arête supérieure de la deuxième armoire de commande (12) est inférieure à 2,20 mm au-dessus d'un sol (10) de l'allée de rayonnages (3).

11. Système de stockage à rayonnages (1a, 1b) comprenant un premier rayonnage (2a) et un deuxième rayonnage (2b) orienté parallèlement à celui-ci, avec une allée de rayonnages (3) se trouvant entre eux, **caractérisé par** un transstockeur (4a, 4b), mobile dans l'allée de rayonnages (3), selon l'une des revendications 1 à 9, qui peut être déplacé vers une position de transfert dans laquelle un transfert de marchandises ou de produits en vrac est possible entre le transstockeur (4a) et le premier et/ou le deuxième rayonnage (2a, 2b),

   dans lequel les armoires de commande (11, 12) sont disposées de manière séparée physiquement entre elles sur le transstockeur (4a, 4b),
   dans lequel la première armoire de commande (11) est disposée de manière asymétrique par rapport à une ligne centrale (C) s'étendant dans l'allée de rayonnages (3) et dans lequel la première armoire de commande (11) est disposée à une première distance minimale ($b_1$) du premier rayonnage (2a) et à une deuxième distance minimale ($b_2$) du deuxième rayonnage (2a),
   dans lequel la deuxième distance minimale ($b_2$) est supérieure à la première distance minimale ($b_1$) et est d'au moins 35 cm.

12. Système de stockage à rayonnages (1a, 1b) selon la revendication 11, **caractérisé en ce qu'**une porte d'armoire de commande (21, 21a, 21b) de la première armoire de commande (11) est orientée, dans l'état fermé, transversalement par rapport à la ligne centrale (C) mentionnée.

13. Système de stockage à rayonnages (1a, 1b) selon la revendication 11 ou 12, **caractérisé en ce qu'**une échelle (23) pour monter sur le transstockeur (4a, 4b) est disposée sur une/la porte d'armoire de commande (21, 21a, 21b) de la première armoire de commande (11).

14. Système de stockage à rayonnages (1a, 1b) selon l'une des revendications 12 à 13, **caractérisé en ce qu'**un système de convoyage (25a... 25c, 26) est disposé à une première extrémité de l'allée de rayonnage (3) et est couplé au système de stockage à rayonnages (1a, 1b), et **en ce que** la porte d'armoire de commande (21, 21a, 21b) est orientée vers la première extrémité de l'allée de rayonnages (3).

15. Système de stockage à rayonnages (1a, 1b) selon l'une des revendications 11 à 14, **caractérisé par** une commande qui est conçue pour déplacer un dispositif de levage (14) du transstockeur (4a, 4b) automatiquement à une hauteur ($h_3$) d'au moins 2 m au-dessus d'un sol (10) de l'allée de rayonnages (3), lorsqu'un accès d'une personne dans l'allée de rayonnages (3), dans laquelle le transstockeur (4a, 4b) mentionné se déplace, est détecté.

**Fig. 1**

**Fig. 2**

**Fig. 3**

**Fig. 4**

1a

2a

h₂

4a

**Fig. 5**

1a

2a

b₃ b₁

4a

b₅

2b

b₄ b₂

**Fig. 6**

**Fig. 7**

**Fig. 8**

**Fig. 9**

**Fig. 10**

**IN DER BESCHREIBUNG AUFGEFÜHRTE DOKUMENTE**

**In der Beschreibung aufgeführte Patentdokumente**

- AT 508172 A1
- EP 0608487 A1
- EP 2615056 A1
- US 2015225217 A1
- EP 2883831 A1